# EUROPÄISCHE PATENTSCHRIFT

(11) **EP 1 584 832 B1**
(45) Veröffentlichungstag und Bekanntmachung des Hinweises auf die Patenterteilung: **25.02.2009**
(21) Anmeldenummer: 05004604.4
(22) Anmeldetag: 03.03.2005
(51) Int. Cl.: F16D 48/06

(54) **Verfahren zum Ansteuern des Kupplungsmomentes einer Kupplung eines automatisierten Getriebes und eine Vorrichtung zum Durchführen des Verfahrens**
Method to control the clutch torque of an automated gearbox and device to carry out the method
Méthode pour contrôler le couple d'un embrayage d'une boîte de vitesses automatisée et appareil pour réaliser la méthode

(30) Priorität: 06.04.2004 DE 102004016899
(43) Veröffentlichungstag der Anmeldung: 12.10.2005
(73) Patentinhaber: LuK Lamellen und Kupplungsbau Beteiligungs KG, 77815 Bühl (DE)
(72) Erfinder: Berger, Reinhard, Dr., 77815 Bühl (DE); Weber, Thomas, 76461 Muggensturm (DE)

(56) Entgegenhaltungen:
- EP-A- 1 403 547
- DE-A1- 10 228 029
- DE-A1- 10 316 458
- DE-A1- 19 733 465

## Beschreibung

Die vorliegende Erfindung betrifft ein Verfahren zum Ansteuern des Kupplungsmomentes einer Kupplung eines automatisierten Getriebes in einem Antriebsstrang eines Fahrzeuges bei aktivierter Kriechfunktion. Ferner betrifft die Erfindung eine Vorrichtung, insbesondere zum Durchführen des Verfahrens zum Ansteuern des Kupplungsmomentes.

Aus der Druckschrift DE 197 33 465 A1 ist eine Anordnung zur Steuerung einer automatisierten Kupplung und ein Verfahren zum Steuern einer automatisierten Kupplung eines Kraftfahrzeuges, insbesondere bei geringen Fahrzeuggeschwindigkeiten, bekannt. Die bekannte Anordnung weist Mittel zum Erfassen der Betätigung des Bremspedals, des Rückwärtsrollens und des Vorwärtsrollens auf, deren Ausgangssignale einer Entscheidungsvorrichtung zugeordnet werden, welche entsprechend der Ausgangssignale entscheidet, welcher Fahrzustand vorliegt, und entsprechend des Fahrzustandes die Steuerung der automatisierten Kupplung an verschiedene, mit der Entscheidungsvorrichtung verbundene Steuereinrichtungen übergibt. Die verschiedenen Steuervorrichtungen steuern die automatisierte Kupplung derart an, dass sich das Fahrzeug bei niedrigen Fahrzeuggeschwindigkeiten wie ein Fahrzeug mit einem hydrodynamischen Drehmomentenwandler verhält.

Des weiteren ist aus der Druckschrift DE 102 28 029 A1 ein Verfahren zur Veränderung des Kupplungsmomentes einer Kupplung im Antriebsstrang eines Fahrzeuges mit einem automatisierten Schaltgetriebe bekannt. Bei dem bekannten Verfahren wird das Kupplungsmoment in Abhängigkeit eines variablen, die Kriechphase des Fahrzeuges beschreibenden Betriebsparameters des Fahrzeuges verändert. Dies bedeutet, dass ein oder mehrere Betriebsparameter des Fahrzeuges überwacht werden, die eine Langsamfahrt oder Kriechfahrt des Fahrzeuges beschreiben, und dass in Abhängigkeit des Betriebsparameters oder der Betriebsparameter das von der Kupplung übertragene Moment verändert wird.

Dadurch wird erreicht, dass die Kriechfahrt des Fahrzeuges ohne die Gefahr eines Abwürgens des Motors verbessert werden kann, da nicht mehr nur eine digitale Information in der Form des Bremslichtschalters ausgewertet wird, sondern einer oder mehrere die Kriechfahrt des Fahrzeugs beschreibende, sich nicht digital verändernde Betriebsparameter ausgewertet werden. Beispielsweise kann bei Gefahr des Abwürgens des Motors das Kupplungsmoment zunächst mit höherer Geschwindigkeit verringert werden, und zwar in Abhängigkeit des gewählten Betriebsparameters, und danach das Kupplungsmoment mit einer niedrigeren Geschwindigkeit verringert werden, so dass, verglichen mit einer linearen Verringerung der Geschwindigkeit des Kupplungsmoments, eine komfortablere Kriechfahrt zur Verfügung steht.

Die EP 1 403 547 A2 offenbart weiterhin eine Kupplungssteuerung für ein geschwindigkeitsgeregeltes Kriechen, bei dem ab einer vorzugebenden Maximalgeschwindigkeit ein minimales Kupplungsmoment vorgegeben wird.

Der vorliegenden Erfindung liegt die Aufgabe zugrunde, ein Verfahren der eingangs genannten Gattung vorzuschlagen, welche das Kriechverhalten bei Fahrzeugen mit automatisierten Getrieben weiter verbessert.

Diese Aufgabe kann durch ein erfindungsgemäßes Verfahren zum Ansteuern des Kupplungsmomentes einer Kupplung eines automatisierten Getriebes in einem Antriebsstrang eines Fahrzeuges bei aktivierter Kriechfunktion gelöst werden, wobei das Kupplungsmoment in Abhängigkeit des Schlupfes an der Kupplung und/oder in Abhängigkeit der Geschwindigkeit des Fahrzeuges angesteuert wird.

Auf diese Weise wird eine schlupf bzw. geschwindigkeitsabhängige Kriechstrategie für ein Fahrzeug mit einem automatisierten mechanischen Getriebe und Reibkupplungen realisiert. Insbesondere kann bei großem Schlupf an der Kupplung auch ein großes Moment übertragen werden, welches bedeutet, dass beim Ankriechen aus dem Stillstand zunächst das maximale Kriechmoment übertragen wird, welches dann mit sinkender Schlupfdrehzahl bzw. wachsender Fahrzeuggeschwindigkeit stetig abnehmen kann. Bei einem Gleichlauf von An- und Abtrieb kann vorgesehen sein, dass kein Moment mehr übertragen wird.

Ein weiterer Aspekt der Erfindung sieht vor, dass ein Kupplungssollmoment zumindest in Abhängigkeit einer vorgegebenen Schlupfdrehzahl der Kupplung bestimmt wird. Somit kann bei einer Kriechphase des Fahrzeuges anhand einer Nennschlupfdrehzahl das Kupplungssollmoment bestimmt werden. Die Nennschlupfdrehzahl kann beispielsweise aus der Differenz der Motorleerlaufdrehzahl und einer abtriebsseitigen Drehzahl ermittelt werden. Beispielsweise kann die Differenz auch aus der Nennlesrlaufdrehzahl des Motors und der aktuellen (berechneten) Getriebeeingangswellendrehzahl definiert werden. Alternativ kann als abtriebsseitige Drehzahl auch eine z.B. gemessene Raddrehzahl verwendet werden.

Somit ist das Kriechmoment nicht in erster Linie direkt von der tatsächlichen aktuellen Motordrehzahl abhängig, so dass etwaige Schwingungen von Motordrehzahl und Kupplungssollmoment vermieden werden können, welche bei der Berechnung unter Verwendung des realen Schlupfes an der Kupplung entstehen können. Erst bei sehr niedrigen realen Motordrehzahlen können diese beispielsweise direkt berücksichtigt werden, wobei das

Kupplungssollmoment in derartigen Fällen nicht weiter erhöht bzw. verringert wird, um ein Abwürgen des Motors zu vermeiden.

Es ist vorgesehen, dass das Kupplungssollmoment aus einer der Nennschlupfdrehzahl proportionalen Funktion oder dergleichen bestimmt wird, wobei das Kupplungssollmoment in geeigneter Weise durch kalibrierbare Größen begrenzt wird. Das jeweilige Kupplungssollmoment ist nach oben hin durch ein maximales Kupplungssollmoment Mₘₐₓ bis zu einer minimalen Fahrzeuggeschwindigkeit Vₘᵢₘ begrenzt. Nach unten hin ist ein minimales Kupplungssollmoment Mₘᵢₙ ab einer maximalen Fahrzeuggeschwindigkeit Vₘₐₓ begrenzt.

Der Eintritt in die Kriechphase kann sowohl bei einem Stillstand des Fahrzeuges als auch bei einem rollenden Fahrzeug erfolgen. Um trotz des für die gewünschte Verhaltensweise notwendigen großen Anfangskupplungsmoments stets weiche Übergänge ohne spürbare Schläge beim Kriechen zu erreichen, können bei dem erfindungsgemäßen Verfahren kalibrierbare, zeit- und/oder nennschlupfabhängige Rampenfunktionen mit unterschiedlichen Steigungen zum Aufbau des Kupplungssollmomentes verwendet werden, wobei das aktuelle Kupplungssollmoment als Startwert einen Maximalwert in Abhängigkeit des Nennschlupfes bestimmt wird.

Wenn ein zyklischer Durchlauf während einer Kriechphase absolviert wird, kann nach der Berechnung eines maximalen Kupplungsmomentes geprüft werden, ob eine applizierbare Startrampenfunktion nicht mehr verwendet werden muss, welches von der Höhe des Kupplungsmomentes beim Eintritt in die Kriechphase und von der seither vergangenen Zeit abhängig ist.

Wenn die applizierbare Startrampenfunktion nicht verwendet wird, kann geprüft werden, ob eine zweite Rampenfunktion, welche in jedem Fall durchlaufen werden sollte, bereits beendet ist. Falls dies nicht der Fall ist, kann das Kupplungssollmoment nach der zweiten Rampenfunktion gemäß dem erfindungsgemäßen Verfahren errechnet werden, wobei nach Beendigung der Rampenfunktionen das Kupplungssollmoment während der Kriechphase stets auf den am Anfang berechneten Maximalwert gesetzt werden kann.

Eine erfindungsgemäße Weiterbildung der vorliegenden Erfindung kann vorsehen, dass das erfindungsgemäße Verfahren auch einen geeigneten Abwürgeschutz bei der Ansteuerung des Kupplungsmomentes realisiert. Vorzugsweise kann im Rahmen des Abwürgeschutzes geprüft werden, ob die jeweils aktuelle Motordrehzahl über einer applizierbaren Grenzdrehzahl für den Abwürgeschutz liegt. Wenn die aktuelle Motordrehzahl über dieser Grenzwertdrehzahl liegt, kann z. B. vorgesehen sein, dass das berechnete Kupplungssollmoment beibehalten wird. Dagegen kann bei Unterschreitung der Grenzdrehzahl z. B. ein sofortiges Öffnen der Kupplung oder dergleichen vorgesehen sein. Ansonsten kann beispielsweise durch ein entsprechendes Zeitkriterium über die Beibehaltung des Kupplungsmomentes aus dem vorherigen Durchlauf der Kriechphase bzw. über eine schrittweise Verringerung des Kupplungsmomentes entschieden werden.

Des weiteren kann die der Erfindung zugrunde liegende Aufgabe auch durch eine Vorrichtung zum Ansteuern des Kupplungsmomentes einer Kupplung eines automatisierten Getriebes in einem Antriebsstrang eines Fahrzeuges bei aktivierter Kriechfunktion gelöst werden, wobei zumindest eine Steuereinrichtung vorgesehen ist, welche das Kupplungsmoment in Abhängigkeit des Schlupfes an der Kupplung und/oder in Abhängigkeit der Geschwindigkeit des Fahrzeuges ansteuert.

Insbesondere kann die vorgeschlagene Vorrichtung auch zum Durchführen des erfindungsgemäßen Verfahrens verwendet werden. Eine Anwendung insbesondere bei Fahrzeugen mit automatisiertem Schaltgetriebe (ASG) oder einem Parallelschaltgetriebe (PSG) ist besonders sinnvoll.

Zusammenfassend kann das Kriechverhalten bzw. das Ankriechverhalten eines Fahrzeuges mit einem Parallelschaltgetriebe durch das erfindungsgemäße Verfahren verbessert werden, indem das schlupfabhängige Kriechverhalten von Automatikfahrzeugen mit hydraulischem Wandler angenähert wird. Bei der erfindungsgemäßen Lösung wird das Kupplungssollmoment nicht anhand des realen Schlupfes, sondern vielmehr anhand einer Nennschlupfdrehzahl als Differenz einer Soll- bzw. Nennleerlaufdrehzahl und einer berechneten Getriebeeingangswellendrehzahl bestimmt. Hierdurch können Schwingungen von der Motordrehzahl und des Kupplungsmomentes vermieden werden. Die aktuelle Motordrehzahl kann vorzugsweise für die Verhinderung des Abwürgens des Motors berücksichtigt werden. Um sowohl bei einem stehenden als auch bei einem rollenden Fahrzeug sanfte, schlagfreie Übergänge zum Kriechen zu erhalten, kann das Kupplungssollmoment über kalibrierbare, zeit- und kupplungsmomentabhängige Rampenfunktionen aufgebaut werden.

Nachfolgend wird die vorliegende Erfindung anhand der Zeichnungen weiter erläutert. Es zeigen:
- Figur 1: Kupplungssollmomentenverläufe über der Fahrzeuggeschwindigkeit;
- Figur 2: einen Verlauf des Kupplungssollmomentes und der Fahrzeuggeschwindigkeit beim Ankriechen aus dem Stillstand über der Zeit; und
- Figur 3: ein Ablaufdiagramm einer erfindungsgemäßen Kupplungssollmomentenberechnung beim Kriechen mit einem Abwürgeschutz.

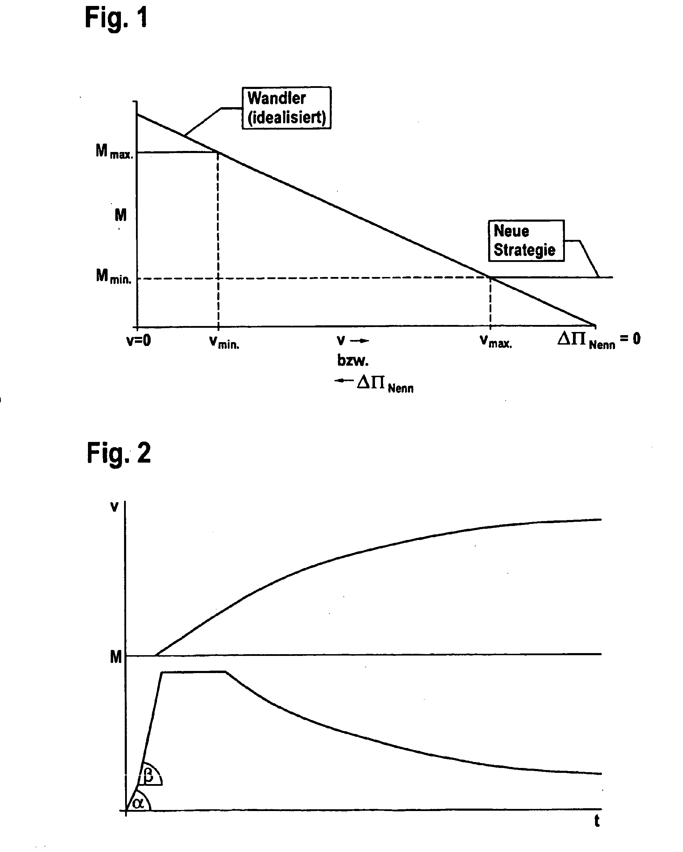

In Figur 1 ist eine mögliche Strategie gemäß dem erfindungsgemäßen Verfahren zum Berechnen des Kupplungssollmomentes aus einem der Nennschlupfdrehzahl proportionalen Funktion dargestellt, wobei zum Vergleich ein Kupplungssollmomentenverlauf bei einem Getriebe mit einem hydrodynamischen Wandler zusätzlich dargestellt ist.

Der erfindungsgemäße Kupplungssollmomentenverlauf wird durch kalibrierbare Größen nach oben bzw. nach unten hin begrenzt. Nach oben erfolgt die Begrenzung durch den maximalen Kupplungssollmomentenwert M_{max,} welcher bis zu einer minimalen Fahrzeuggeschwindigkeit Vₘᵢₙ vorliegt. Danach wird der Kupplungssollmomentenverlauf durch eine Rampenfunktion dargestellt, welche bis zu einer maximalen Fahrzeuggeschwindigkeit Vₘₐₓ vorliegt, bei der dann die Abgrenzung des minimalen Kupplungssollmomentenwertes Mₘᵢₙ erfolgt.

Der Eintritt in die Kriechphase kann sowohl bei einem Stillstand des Fahrzeuges als auch bei rollendem Fahrzeug erfolgen. Um die trotz des für die gewünschte Verhaltensweise notwendigen großen Anfangsmoments stets weichen Übergänge ohne spürbare Schläge beim Kriechen zu erreichen, werden kalibrierbare, zeit- und nennschlupfabhängige Rampenfunktionen unterschiedlicher Steigung zum Aufbau des Kupplungssollmomentes verwendet. Hierbei dient das aktuelle Kupplungssollmoment als Startwert, wobei der Maximalwert nennschlupfabhängig bestimmt wird.

Exemplarisch ist dieses Vorgehen in Figur 2 gezeigt, in der der Verlauf des Kupplungsmomentes und der Fahrzeuggeschwindigkeit beim Ankriechen aus dem Stillstand über der Zeit dargestellt ist. Ausgehend von dem Kupplungsmoment bei Stillstand des Fahrzeuges (0 Nm), erfolgt der Momentenaufbau über zwei aufeinander folgende Rampenfunktionen mit den Steigungswinkeln α bzw. β, bis der Maximalwert des Kupplungssollmomentes erreicht worden ist. Ab diesem Zeitpunkt kommt die in Figur 1 dargestellte Rampenfunktion zum Einsatz.

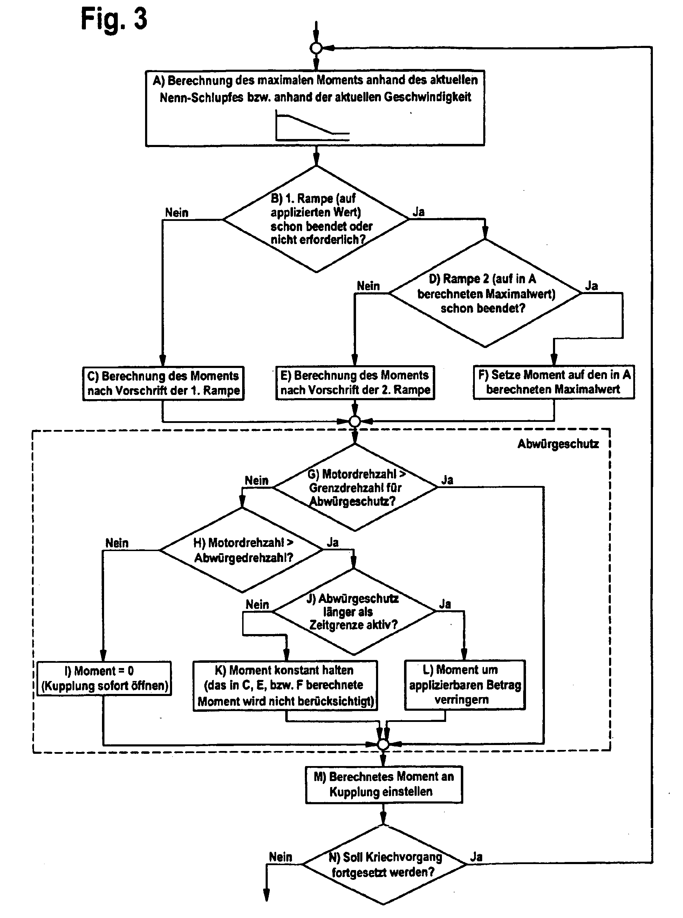

In Figur 3 ist ein Ablaufdiagramm der Kupplungssollmomentenberechnung gemäß dem erfindungsgemäßen Verfahren beim Kriechen beispielhaft dargestellt, welche den Ablauf andeutet, wie er während einer Kriechphase zyklisch durchlaufen wird.

Nach der nennschlupf- bzw. geschwindigkeitsabhängigen Berechnung des aktuell maximalen Kupplungsmoments (A) wird geprüft, ob die applizierbare Startrampenfunktion nicht mehr durchlaufen werden muss (B). Dies hängt zum Einen von der Höhe des Kupplungsmoments beim Eintritt in die Kriechphase und zum Anderen von der seither vergangenen Zeit ab. Wenn dies nicht der Fall ist, wird das Kupplungssollmoment in Abhängigkeit der Applizierung der ersten Rampenfunktion berechnet (C), andernfalls erfolgt die Prüfung, ob die zweite Rampenfunktion, die in jedem Fall durchlaufen werden muss, bereits beendet wurde (D). Falls nicht, wird das Kupplungssollmoment nach der Vorschrift der zweiten Rampenfunktion (E) berechnet. Nach dem Beenden der Rampenfunktionen wird das Kupplungssollmoment während der Kriechphase stets auf den unter (A) berechneten Maximalwert gesetzt (F).

Im unteren Teil des in Figur 3 gezeigten Ablaufdiagramms ist ein nachgelagerter Abwürgeschutz beispielhaft dargestellt. Wenn die aktuelle Motordrehzahl über einer applizierten Grenze für die Aktivierung des Abwürgeschutzes liegt (G), kann das in den Verfahrensschritten (A) bis (F) berechnete Kupplungsmoment beibehalten werden. Ansonsten wird durch das Verfahren geprüft, ob die derzeitige Motordrehzahl gegen die spezifizierte Abwürgedrehzahl verläuft, wobei eine Unterschreitung der Drehzahlgrenze das sofortige Öffnen der Kupplung zur Folge hat (I). Ansonsten kann ein Zeitkriterium (J) über die Beibehaltung des Kupplungsmomentes aus dem vorherigen Durchlauf (K) oder eine schrittweise Verringerung des Kupplungssollmomentes (L) erfolgen.

## Patentansprüche

1. Verfahren zum Ansteuern des Kupplungsmomentes einer Kupplung eines automatisierten Getriebes in einem Antriebsstrang eines Fahrzeuges bei aktivierter Kriechfunktion, wobei das Kupplungsmoment in Abhängigkeit des Schlupfes und/oder in Abhängigkeit der Geschwindigkeit des Fahrzeuges angesteuert wird, ein Kupplungssollmoment zumindest in Abhängigkeit einer vorgegebenen Schlupfdrehzahl der Kupplung ermittelt wird, als Schlupfdrehzahl die Nennschlupfdrehzahl verwendet wird, welche aus der Differenz der Motorieerlaufdrehzahl und einer abtriebsseitigen Drehzahl ermittelt wird, das Kupplungssollmoment anhand einer der Nennschlupfdrehzahl proportionalen Funktion bestimmt wird, wobei das Kupplungssollmoment durch kalibrierbare Größen begrenzt wird und das minimale Kupplungssollmoment (Mₘᵢₙ) ab einer maximalen Geschwindigkeit (vₘₐₓ) eingestellt wird, **dadurch gekennzeichnet, dass** das maximale Kupplungssollmoment (Mₘₐₓ) bis zu einer minimalen Geschwindigkeit (Vₘᵢₙ) eingestellt wird.

2. Verfahren nach Anspruch 1, **dadurch gekennzeichnet, dass** als Motoneerlaufdrehzaht die Motomennleerlaufdrehzahl oder die Motorsollleerlaufdrehzahl verwendet wird.

3. Verfahren nach einem der Ansprüche 1 oder 2, **dadurch gekennzeichnet, dass** als abtriebsseitige Drehzahl die aktuelle Getriebeeingangswellendrehzahl oder eine berechnete Getriebeeingangswellendrehzahl verwendet wird.

4. Verfahren nach einem der Ansprüche 1 bis 3, **dadurch gekennzeichnet, dass** als abtriebsseitige Drehzahl zumindest eine gemessene Raddrehzahl verwendet wird.

5. Verfahren nach einem der Ansprüche 1 bis 4, **dadurch gekennzeichnet, dass** während einer Kriechphase eines Fahrzeuges nach der Berechnung eines maximalen Kupplungsmomentes (Mmax) in Abhängigkeit der Nennschlupfdrehzahl oder der Geschwindigkeit geprüft wird, ob eine applizierbare Startrampenfunktion nicht mehr verwendet wird, welches von dem Wert des Kupplungsmomentes bei Beginn der Kriechphase und von dem Zeitintervall abhängig ist.

6. Verfahren nach Anspruch 5, **dadurch gekennzeichnet, dass**, wenn die applizierbare Startrampenfunktion verwendet wird, das Kuppiungssollmoment in Abhängigkeit der Applizierung der ersten Rampenfunktion berechnet wird.

7. Verfahren nach Anspruch 5 oder 6, **dadurch gekennzeichnet, dass,** wenn die applizierbare Startrampenfunktion nicht verwendet wird, geprüft wird, ob eine zweite Rampenfunktion beendet worden ist, falls nicht, wird das Kupplungssollmoment nach der zweiten Rampenfunktion berechnet.

8. Verfahren nach einem der Ansprüche 5 bis 7, **dadurch gekennzeichnet, dass** das Kupplungssollmoment als Begrenzung nach dem Beenden der Rampenfunktionen während der Kriechphase auf den maximalen Wert des Kupplungssollmomentes (Mmax) gesetzt wird.

9. Verfahren nach einem der vorangehenden Ansprüche, **dadurch gekennzeichnet, dass** ein Abwürgeschutz verwendet wird.

10. Verfahren nach Anspruch 9, **dadurch gekennzeichnet, dass** beim Abwürgeschutz geprüft wird, ob die jeweils aktuelle Motordrehzahl über einer applizierbaren Grenzdrehzahl für den Abwürgeschutz liegt.

11. Verfahren nach Anspruch 10, **dadurch gekennzeichnet, dass,** wenn die aktuelle Motordrehzahl über einer applizierbaren Grenzdrehzahl liegt, das berechnete Kupplungssollmoment beibehalten wird.

12. Verfahren nach Anspruch 10 oder 11, **dadurch gekennzeichnet, dass** bei Unterschreiten der Grenzdrehzahl die Kupplung sofort geöffnet wird.

## Claims

1. Method for controlling the clutch torque of a clutch of an automatic transmission in a drivetrain of a vehicle when a creep function is active, with the clutch torque being controlled as a function of the slip and/or as a function of the speed of the vehicle, a target clutch torque is determined at least as a function of a predefined slip rotational speed of the clutch, the nominal slip rotational speed is used as the slip rotational speed, which nominal slip rotational speed is determined from the difference between the engine idle rotational speed and a drive-output-side rotational speed, the target clutch torque is determined on the basis of a function which is proportional to the nominal slip rotational speed, with the target clutch torque being limited by variables which can be calibrated, and with the minimum target clutch torque (Mₘᵢₙ) being set beyond a maximum speed (Vₘₐₓ) , **characterized in that** the maximum target clutch torque (Mₘₐₓ) is set up to a minimum speed (Vₘᵢₙ).

2. Method according to Claim 1, **characterized in that** the nominal engine idle rotational speed or the target engine idle rotational speed is used as the engine idle rotational speed.

3. Method according to one of Claims 1 or 2, **characterized in that** the present transmission input shaft rotational speed or a calculated transmission input shaft rotational speed is used as the drive-output-side rotational speed.

4. Method according to one of Claims 1 to 3, **characterized in that** at least one measured wheel rotational speed is used as the drive-output-side rotational speed.

5. Method according to one of Claims 1 to 4, **characterized in that,** during a creep phase of a vehicle, after the calculation of a maximum clutch torque (Mₘₐₓ) as a function of the nominal slip rotational speed or of the speed, it is checked whether an applicable start ramp function is no longer being used, which is dependent on the value of the clutch torque at the start of the creep phase and on the time interval.

6. Method according to Claim 5, **characterized in that,** if the applicable start ramp function is being used, the target clutch torque is calculated as a function of the application of the first ramp function.

7. Method according to Claim 5 or 6, **characterized in that,** if the applicable start ramp function is no longer being used, it is checked whether a second ramp function has been ended, and if not, the target clutch torque is calculated according to the second ramp function.

8. Method according to one of Claims 5 to 7, **characterized in that,** after the ending of the ramp functions during the creep phase, the target clutch torque is set, as a limit, to the maximum value of the target clutch torque (Mₘₐₓ).

9. Method according to one of the preceding claims, **characterized in that** an anti-stall function is used.

10. Method according to Claim 9, **characterized in that,** in the anti-stall function, it is checked whether the respectively present engine rotational speed lies above an applicable limit rotational speed for the anti-stall function.

11. Method according to Claim 10, **characterized in that,** if the present engine rotational speed lies above an applicable limit rotational speed, the calculated target clutch torque is maintained.

12. Method according to Claim 10 or 11, **characterized in that,** in the event of the limit rotational speed being undershot, the clutch is immediately opened.

## Revendications

1. Procédé pour commander le moment d'accouplement d'un accouplement d'une boîte de vitesses automatisée dans une chaîne de transmission d'un véhicule lorsqu'une fonction tout terrain est activée, le moment d'accouplement étant commandé en fonction du patinage et/ou en fonction de la vitesse du véhicule, un moment d'accouplement de consigne étant déterminé au moins en fonction d'une vitesse de rotation de patinage prédéfinie de l'accouplement, la vitesse de rotation de patinage utilisée étant la vitesse de rotation de patinage nominale qui est déterminée à partir de la différence entre le régime de ralenti du moteur et une vitesse de rotation côté sortie, le moment d'accouplement de consigne étant déterminé au moyen d'une fonction proportionnelle à la vitesse de rotation de patinage nominale, le moment d'accouplement de consigne étant limité par des grandeurs pouvant être calibrées et le moment d'accouplement de consigne minimum (Mₘᵢₙ) étant réglé à partir d'une vitesse maximale (Vₘₐₓ), **caractérisé en ce que** le moment d'accouplement de consigne maximum (Mₘₐₓ) est réglé jusqu'à une vitesse minimale (Vₘᵢₙ).

2. Procédé selon la revendication 1, **caractérisé en ce que** le régime de ralenti nominal du moteur ou le régime de ralenti de consigne du moteur est utilisé comme régime de ralenti du moteur.

3. Procédé selon l'une des revendications 1 ou 2, **caractérisé en ce que** la vitesse de rotation côté sortie utilisée est la vitesse de rotation actuelle de l'arbre d'entrée de la boîte de vitesses ou une vitesse de rotation calculée de l'arbre d'entrée de la boîte de vitesses.

4. Procédé selon l'une des revendications 1 à 3, **caractérisé en ce que** la vitesse de rotation côté sortie utilisée est au moins une vitesse de rotation de roue calculée.

5. Procédé selon l'une des revendications 1 à 4, **caractérisé en ce que** pendant une phase tout terrain d'un véhicule, après le calcul d'un moment d'accouplement maximum (Mₘₐₓ) en fonction de la vitesse de rotation de patinage nominale ou de la vitesse, un contrôle est effectué pour vérifier si une fonction de rampe de démarrage applicable n'est plus utilisée, laquelle dépend de la valeur du moment d'accouplement au début de la phase tout terrain et de l'intervalle de temps.

6. Procédé selon la revendication 5, **caractérisé en ce que** lorsque la fonction de rampe de démarrage applicable est utilisée, le moment d'accouplement de consigne est calculé en fonction de l'application de la première fonction de rampe.

7. Procédé selon la revendication 5 ou 6, **caractérisé en ce que** lorsque la fonction de rampe de démarrage applicable n'est pas utilisée, un contrôle est effectué pour vérifier s'il a été mis fin à une deuxième fonction de rampe et, à défaut, le moment d'accouplement de consigne est calculé d'après la deuxième fonction de rampe.

8. Procédé selon l'une des revendications 5 à 7, **caractérisé en ce que** le moment d'accouplement de consigne est défini en tant que limite après la fin des fonctions de rampe pendant la phase tout terrain à la valeur maximale du moment d'accouplement de consigne (Mₘₐₓ).

9. Procédé selon l'une des revendications précédentes, **caractérisé en ce qu'**une protection anti-calage est utilisée.

10. Procédé selon la revendication 9, **caractérisé en ce qu'**un contrôle est effectué, pour la protection anti-calage, pour vérifier si le régime actuel du moteur est supérieur à une vitesse de rotation maximale applicable pour la protection anti-calage.

11. Procédé selon la revendication 10, **caractérisé en ce que** lorsque le régime du moteur actuel est supérieur à une vitesse de rotation applicable, le moment d'accouplement de consigne calculé est maintenu.

12. Procédé selon la revendication 10 ou 11, **caractérisé en ce que** l'accouplement est immédiatement ouvert en cas de franchissement vers le bas de la vitesse de rotation limite.
